(19) Europäisches Patentamt
European Patent Office
Office européen des brevets

(11) **EP 2 955 078 B1**

(12) **EUROPEAN PATENT SPECIFICATION**

(45) Date of publication and mention
of the grant of the patent:
**28.10.2020 Bulletin 2020/44**

(51) Int Cl.:
**B60W 40/12** (2012.01)

(21) Application number: **15001708.5**

(22) Date of filing: **09.06.2015**

(54) **TIRE CLASSFICATION**

REIFENKLASSIFIZIERUNG

CLASSIFICATION DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2014 DE 102014008500**

(43) Date of publication of application:
**16.12.2015 Bulletin 2015/51**

(73) Proprietor: **Nira Dynamics AB
583 30 Linköping (SE)**

(72) Inventors:
• **Svantesson, Thomas
58951 Linköping (SE)**
• **Karlsson, Rickard
58239 Linköping (SE)**
• **Svensson, Anders
59073 Linköping (SE)**
• **Lindfors, Martin
58436 Linköping (SE)**

(74) Representative: **Samson & Partner Patentanwälte
mbB
Widenmayerstraße 6
80538 München (DE)**

(56) References cited:
**EP-A2- 0 970 823          EP-A2- 1 510 427
WO-A1-2005/005175    DE-A1-102009 029 272
US-A1- 2004 225 423**

**Description**

*TECHNICAL FIELD*

The present disclosure relates generally to the determination of tire class of a tire mounted on a wheel of a vehicle and, for example to systems methods and computer program products for determination of tire type mounted on a vehicle.

*BACKGROUND*

Modern cars comprise electronic control systems or vehicle handling systems like traction control system (TCS), Electronic Stability Program (ESP), active suspension system or Anti-lock braking system (ABS). Besides these active control systems there also exist vehicle driver safety information systems such as road friction indicators and sensor-free tire pressure monitoring system, e.g. indirect tire pressure monitoring system (*iTPMS*), which present information about the driving condition to the driver.

All the above-mentioned systems benefit from the knowledge about a large set of estimated or measured vehicle properties parameters such as tire air pressure, tire longitudinal stiffness, ambient temperature, tire temperature, wheel resonance frequency, carried vehicle load, tire radius change while cornering and wheel vibration dependent on speed.

Document EP 1510 427 A2 is directed to a determination of road surface conditions, for which determination the difference of slip ratios between front and rear wheels, information on the deceleration of the vehicle and the tire type are the only input parameters. The difference of slip ratios between front and rear wheels is also used in the determination of the tire type.

Document US 2004/225423 discloses to determine tire operation parameters, like tire pressure, tire temperature, tire wear and longitudinal tire stiffness.

Document WO 2005/005175 A2 discloses a method for tire type classification, wherein a frequency peak of a frequency spectrum is used to determine a characteristic tire characteristic.

Document DE 10 2009 029272 A1 discloses to determine a tire type on the basis of environmental information.

Document EP 0 970 823 A2 discloses to determine a type of a tire on the basis of measured rotational information of each tire in vehicles equipped with limited slip differential device. Document EP 0 970 823 A2 compares rotational information from tires for a driving situation where the limited slip differential device is not active and rotational information from tires for a driving situation where the limited slip differential device is active.

*SUMMARY*

It is the object of the present invention to improve the data basis on which vehicles' control systems, handling systems and driver information systems operate and, thus, the performance of such systems, particularly performance of vehicle handling control systems, such as tire pressure indicator (TPI), traction control system (TCS), Electronic Stability Program (ESP), active suspension system or Anti-lock braking system (ABS).

To solve this object, the present invention provides methods, systems and computer program products for determining a tire class of a tire mounted on a wheel of a driving vehicle as defined in the independent claims. Preferred embodiments thereof are defined in the dependent claims as well as the description and drawings.

The present invention relates to techniques for estimating the tire class, which make use of signals obtained from sensors, e.g. wheel speed sensors or wheel acceleration sensors. For example, using the signals from wheel speed sensors of ABS systems and/or from the vehicle's internal data bus, such as a FlexRay/CAN-bus provides an economical way to perform tire classification determination since these ABS systems belong to the standard equipment of the majority of the cars and trucks sold today.

*BRIEF DESCRIPTION OF DRA WINGS*

Embodiments of the invention will now be described in more detail with reference to the appended drawings, wherein:

Figure 1 schematically shows a driving vehicle comprising sensors and a processor or evaluator 102.

Figure 2 schematically shows a schematic diagram of a wheel speed sensor.

Figure 3 schematically shows exemplary results based on a predetermined relation used by the processor or evaluator to determine a tire class of a tire mounted on a wheel of a driving vehicle.

Figure 4 schematically shows exemplary results based on a predetermined relation comprising an inferred function or a vehicle property parameter values estimation relation and one or more decision boundaries.

Figure 5 schematically shows an embodiment of method of determining a tire class of a tire mounted on a wheel of a driving vehicle.

Figure 6 shows exemplary vehicle properties parameter values for estimated inverse tire longitudinal stiffness and ambient temperature.

Figure 7 shows an exemplary embodiment of a predetermined relation applied to estimated vehicle properties parameters from a medium-size vehicle.

Figures 8A and 8B show exemplary results of rim size determinations/estimations.

Figure 9 shows exemplary results of tire pressure vibration sensitivity determinations/estimations.

*DETAILED DESCRIPTION*

In general the present invention for determining the tire class or tire properties of a tire mounted on a wheel of a driving vehicle is based on a set of estimated vehicle properties parameters derived from sensor signals, such as wheel speed sensor signals and/or wheel acceleration sensor signals, from sensors mounted on or comprised in the vehicle. The estimated vehicle properties parameters is derived by control electronics or a processor or evaluator 102 comprised in the vehicle.

The derived estimated vehicle properties parameter values can be obtained by the processor or evaluator 102, e.g. by retrieving them from a memory communicatively coupled to the processor or evaluator 102 or obtained from a driving vehicle's internal data bus communicatively coupled to the processor or evaluator 102 and said sensors. Driving sensor data bus may support a selection of automotive network communications protocols such as FlexRay, controller area network CAN and Time-Triggered Protocol TTP, as would be understood by a person skilled in the art.

Sensors for generating sensor signals that can be used with the present invention is a selection of at least one of, for example, a wheel speed sensor, a wheel acceleration sensor, a 3D driving vehicle position sensor, a driving vehicle velocity sensor, a wheel acceleration sensor, a wheel/tire pressure sensor, a driving vehicle yaw rate sensor, an engine torque sensor, a wheel axis torque sensor, a suspension (related) sensor, a wheel temperature sensor and an ambient temperature sensor. Suitable sensor types include, e.g., ultrasound sensors, microphones, laser sensors, axel height sensors, any other analog distance sensors, geophones which convert displacements into voltage, or e.g. in-tire pressure/accelerometer sensors.

Sensor data that can be used with the present invention is a selection of at least one of, for example, sensor data indicative of individual tire longitudinal stiffness for at least one wheel, sensor data indicative of inverse individual tire longitudinal stiffness for at least one wheel, sensor data indicative of ambient temperature, sensor data indicative of individual tire temperature for at least one wheel, sensor data indicative of individual wheel/tire pressure for at least one wheel, sensor data indicative of suspension pressure and/or force acting on at least one of the at least one tire e.g. due to load of the vehicle, sensor data indicative of individual wheel radius change for at least one wheel e.g. during cornering, sensor data indicative of individual wheel vibration for at least one wheel e.g. at various driven vehicle speeds, sensor data indicative of individual wheel speeds for at least one wheel, sensor data indicative of individual wheel acceleration for at least one wheel, sensor data indicative of suspension height information related to at least one tire, sensor data indicative of suspension stiffness acting on at least one tire, sensor data indicative of at least one of current and future control measures of extension and/or height of suspension means acting on at least one tire, sensor data indicative of operation of a semi-active or active suspension control system of the driving vehicle, sensor data indicative of at least one of a lateral acceleration and a longitudinal acceleration of the vehicle (e.g. including at least one x, y, z position; roll and/or pitch information on the vehicle; e.g. obtained from a so-called three-dimensional inertial measurement unit 3DIMU); sensor data indicative of a yaw rate of the vehicle, sensor data indicative of a speed of the vehicle; sensor data indicative of a steering wheel angle of a steering wheel of the vehicle, sensor data indicative of at least one of positioning, orientation and emission direction of at least one head light of the vehicle, sensor data indicative of a driving condition of the vehicle, particularly a braking condition, sensor data indicative that a braking system of the vehicle is operating (e.g. a brake active flag), sensor data indicative of brake pressure, sensor data indicative that at least one active control device of the vehicle is active, sensor data indicative of an engine torque of an engine of the vehicle, sensor data indicative of a torque acting on the at least one tire, sensor data indicative of wheel slip related to the at least one tire, sensor data indicative of a tractive force of at least one wheel, sensor data indicative of an engine speed of an engine of the vehicle, and sensor data indicative that a gear shift of the vehicle is in progress.

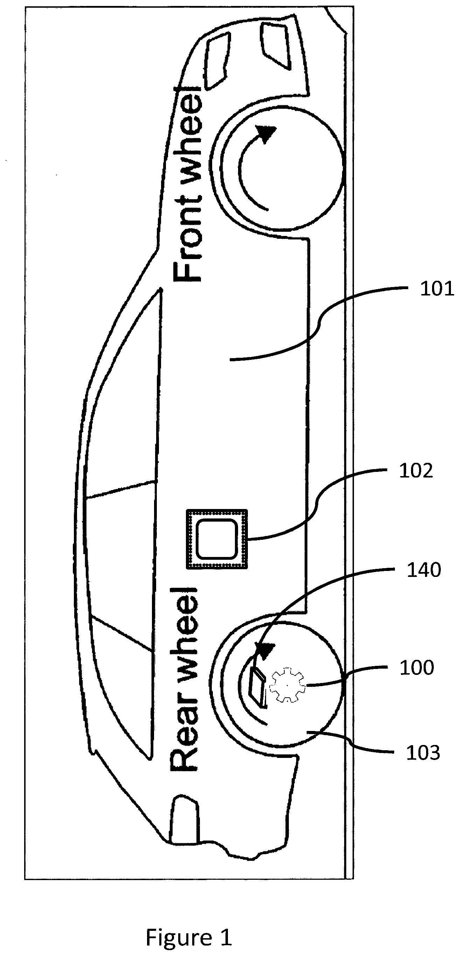

Figure 1 schematically shows a driving vehicle 101 in the form of a car with four wheels 103 with mounted tires. The vehicle comprises sensors 100 and 140 that are configured to measure and send measurement data or sensor data as sensor signals to a processor or evaluator 102.

The processor or evaluator 102 is further configured to estimate or obtain a set of vehicle properties parameters based on at least one of said sensor signals and to determine a tire class based on said estimated vehicle properties parameters and at least one predetermined relation.

The vehicle further comprises an internal data bus communicatively coupled to at least the sensors 100 and 140 and the processor or evaluator 102 and configured to transfer data to and from units communicatively coupled to the internal data bus. The driving sensor data bus may support at least one of a selection of automotive network communications protocols, including FlexRay, controller area network CAN and Time-Triggered Protocol TTP.

The vehicle may be any wheeled vehicle, like cars, lorry, trucks, motorcycles, etc. which have at least one wheel in contact with the ground. The sensors used to obtain the sensor signals may be of any sensor type which is responsive to movement of a wheel/tire indicating a tire class. As noted above, the sensors may be any common wheel speed sensors and/or wheel acceleration sensors. Preferably, the wheel speed sensors of an antilock braking system (ABS) are used in one embodiments since such ABS-sensors are already mounted in all vehicles today. Wheel speed sensors are well known to the person skilled in the art.

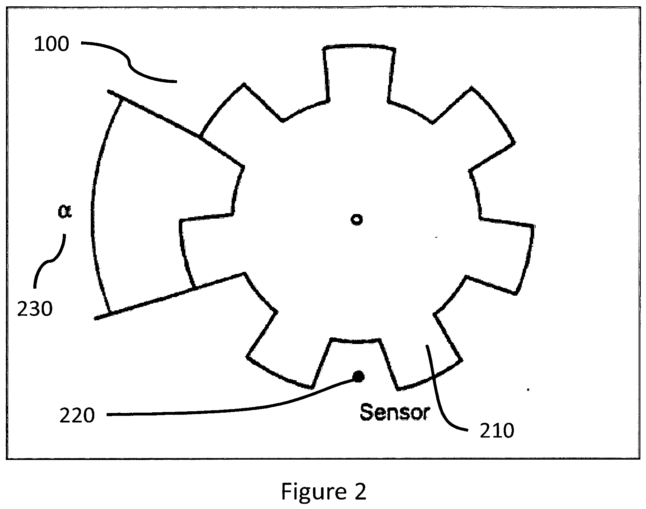

Figure 2 shows a schematic diagram of an exemplary wheel speed sensor 100 comprising a toothed wheel 210 with, for example, in this case seven identical teeth. A sensor component 220 is located and arranged, respectively, such to generate a sensor signal whenever a tooth (cog) of the toothed wheel passes the sensor. The sensor 100 may be an optical sensor, a magnetic sensor (e.g. a HALL sensor) or any other conceivable type of sensor. The sensor produces electrical signals which are transported by wires or radio transmission to the processor or evaluator unit 102 for further processing. In the example of Figure 2, there are in total seven sensor signals generated during one complete revolution of the toothed wheel.

With respect to wheel acceleration, any sensor(s) capable to determine the acceleration of a wheel can be used.

The above-mentioned predetermined relation may comprise one or more decision boundaries, such as thresholds.

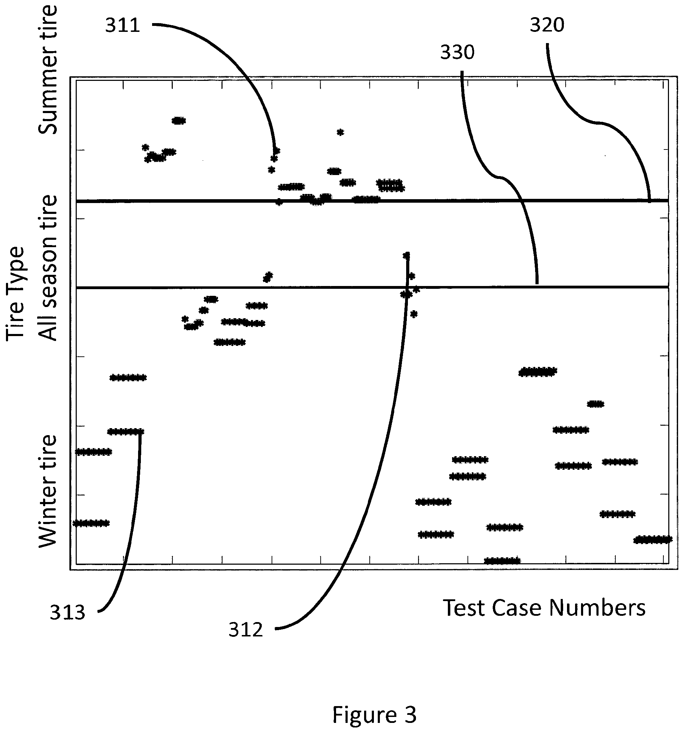

Figure 3 illustrates such a predetermined relation used by the processor or evaluator 102 to determine a tire class of a tire mounted on a wheel of a driving vehicle. According to embodiments of the present invention, the processor or evaluator 102 may determine a tire class by evaluating a predetermined relation that compares vehicle property parameter values 311, 312, 313 to predetermined vehicle property parameter value thresholds 320, 330. The vehicle property parameter values 311, 312, 313 may, for example, indicate the tire longitudinal stiffness (or an estimation thereof) of the wheel and/or the ambient temperature. In the case of a vehicle property parameter value concerning tire longitudinal stiffness, it is preferred to use a vehicle property parameter value indicating the inverse tire longitudinal stiffness or an estimation thereof.

For example, only using vehicle property parameter values indicating the estimated inverse tire longitudinal stiffness and the temperature, it is possible to determine whether a tire is a summer or winter tire. The inverse longitudinal stiffness can be, for example, estimated, through a linear regression model and averaging (e.g. to determine a mean value) over a longer period of driving. The result may be further by weighting with various factors, for example, temperature.

As illustrated in Figure 3, for vehicle property parameter values below a first threshold 330 a tire class "winter tires" is determined, for vehicle property parameter values equal to or above a first threshold 330 and below a second threshold 320 a tire class "all season" is determined and for vehicle property parameter values equal to or above a second threshold 320 a tire class "summer" is determined.

In addition or as alternative, vehicle property parameter values may be estimated using a predetermined vehicle property parameter values estimation relation. A vehicle property parameter values estimation relation may be obtained by supervised learning based on a training data set, wherein the training data set comprises predetermined sensor data and predetermined vehicle property parameter values, as would be understood by a person skilled in the art.

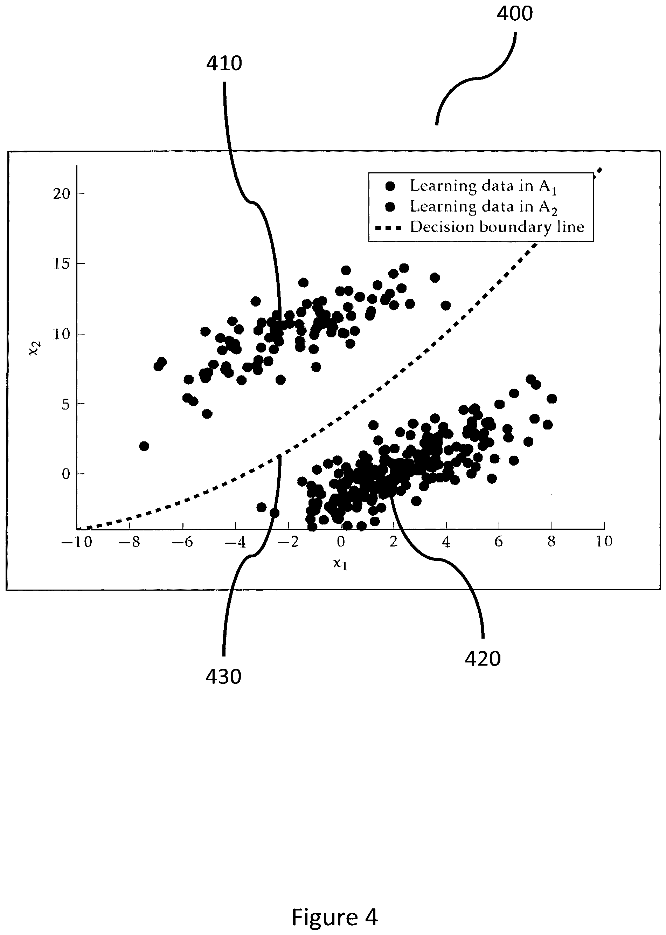

This is illustrated by Figure 4 showing a predetermined relation 400 comprising an inferred function or a vehicle property parameter values estimation relation and one or more decision boundaries, wherein the vehicle property parameter values estimation relation and the decision boundaries are determined based on training data sets 410 and 420. For the training data sets the sensor data, the estimated vehicle property parameter values and the tire class is known and a process known as supervised learning can be applied based on the training data set, wherein the training data set comprises predetermined sensor signal data and predetermined vehicle property parameter values.

When a driving vehicle is operated by a user, then information or data related to the tire class of a tire mounted on a wheel of a driving vehicle is received as sensor signals from sensors located in the vehicle, e.g. at the wheel, by processor or evaluator 102. Based on the received sensor signals the processor or evaluator 102 estimates a set of vehicle property parameter values that can be kept in memory or stored to non-volatile memory. The processor or evaluator 102 can then determine a tire class of a tire mounted on a wheel of said vehicle based on the estimated set of vehicle property parameter values and a predetermined relation.

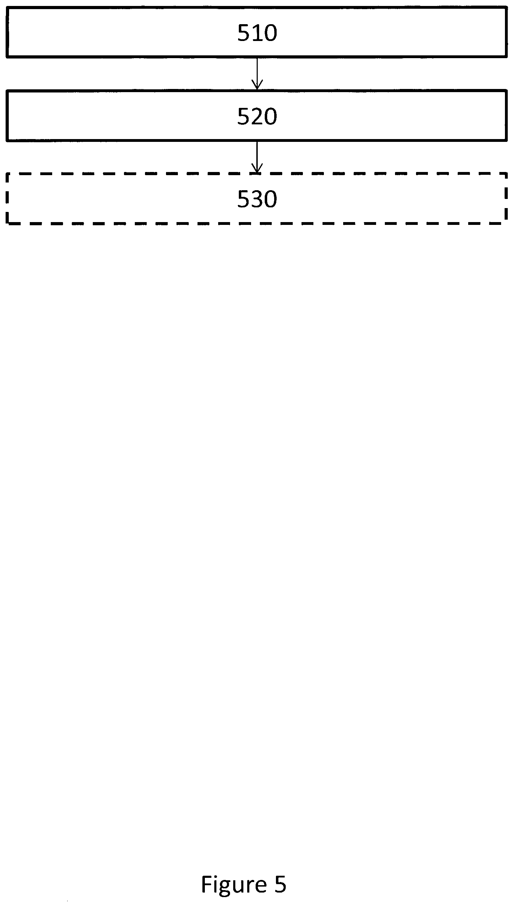

Figure 5 shows a flowchart of one or more embodiments of a method of determining a tire class of a tire mounted on a wheel of a driving vehicle, the method comprising:

Step 510: Obtaining a set of estimated vehicle properties parameters, wherein said vehicle properties parameters are estimated based at least on sensor signals received from sensors comprised in said vehicle.

Step 520: Determining a tire class based on said set of estimated vehicle properties parameters and a predetermined relation.

In a non-limiting example a set of vehicle properties parameter values comprising estimated inverse tire longitudinal stiffness and temperature is obtained. As temperature, the ambient temperature, the tire temperature or a combination of the ambient temperature and the tire temperature can be used. To obtain the ambient temperature, a respective temperature sensor already installed in vehicles can be used. The ambient temperature as such can be used, or the ambient temperature can be used to estimate the temperature of the tire, wherein the tire temperature is then used for the vehicle properties parameter values. The actual tire temperature can differ from the ambient temperature, for example, at high vehicle speeds (e.g. race-track, German Autobahn) and/or on a rather warm or cold surface the vehicle is moving. Therefore, it is preferred to use the tire temperature. Further it is contemplated to use a temperature value resulting from a combination/fusing of the tire and ambient temperatures (e.g. by weighing). In the following, the term temperature indicates the ambient temperature, the tire temperature or a combination/fusing of the tire and ambient temperatures.

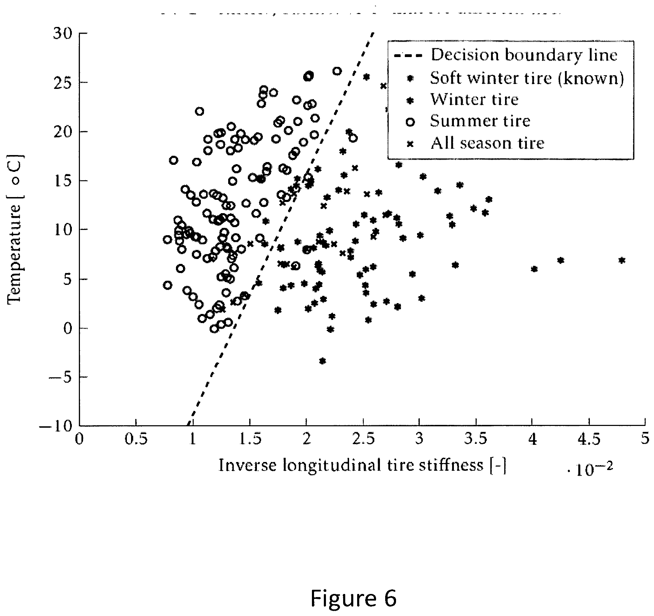

A tire class is determined by comparing the set of estimated vehicle properties parameters to a predetermined relation comprising predetermined decision boundaries such as thresholds. For example, an inverse tire longitudinal stiffness value above a first threshold and a temperature value above a second threshold is determined as a winter tire. An inverse tire longitudinal stiffness value below a first threshold and a temperature value below a second threshold is determined as a winter tire. This is illustrated in Figure 6 showing exemplary vehicle properties parameter values for estimated inverse tire longitudinal stiffness and ambient temperature. In Figure 6, the oblique dashed line indicates boundary, wherein vehicle properties parameter values having an estimated inverse tire longitudinal stiffness and a temperature on the left of the boundary indicates summer tires and vehicle properties parameter values having an estimated inverse tire longitudinal stiffness and a temperature on the right of the boundary indicates winter tires.

As tires are important components of road-going vehicles that limits handling, acceleration and de-acceleration/breaking, it is also an important input to active vehicle handling systems to improve performance. For example, the behavior of a vehicle may vary when operated on summer tires, winter tires, cup tires, small rims, large rims, fresh tires or worn tires. Even a vehicle driving around a track with the same tires will start to behave differently as the tires wear and the active vehicle handling systems needs ideally to adapt to and compensate for this changed behavior. To this end, the method further comprises the optional step of:

Step 530: Controlling a selection at least one of, for example, a traction control system, an electronic stability program system, an active suspension system, an anti-lock braking system or a tire pressure monitoring system comprised in said vehicle based on a determined tire class.

A set of vehicle properties parameters may comprise a selection at least one of, for example, tire air pressure, (inverse and/or estimated) tire longitudinal stiffness, ambient temperature, tire temperature, wheel resonance frequency, carried vehicle load, tire radius change while cornering and wheel vibration dependent on speed.

In a non-limiting example, a tire class may comprise data indicative of or representing a tire type, such as summer tire, all season tire, winter tire or cup-tire.

In a non-limiting example, in the case of an estimated tire longitudinal stiffness value above a predefined threshold, a tire class representing a tire type (e.g. a cup-tire) may be determined.

In one or more embodiments, a tire class may comprise data indicative of or representing wheel rim size, such as 12 to 26 inch rims.

In a non-limiting example, in the case of an estimated tire longitudinal stiffness value above a predefined first threshold and below a second predefined threshold, a rim size in Inch (e.g., 21 inches) may be determined.

In one or more embodiments, a tire class may comprise data indicative of tire pressure vibration sensitivity.

In a non-limiting example, an estimated tire pressure value may be compensated based on the tire pressure vibration sensitivity value to achieve an improved estimation of tire pressure.

In a non-limiting example, the sensor signals may be wheel speed signals from rotary speed sensors, located at the wheels, indicative of the time dependent behavior of the wheel speeds of the vehicle.

In a non-limiting example, the sensor signals may be obtained from accelerometer sensors, located at the wheels of the vehicle, indicative of the time dependent behavior of the wheel accelerations of the vehicle.

In a non-limiting example, a set of vehicle properties parameters may be obtained from a driving sensor data bus, wherein the driving sensor data bus supports a selection of automotive network communications protocols such as FlexRay, controller area network (CAN) and Time-Triggered Protocol (TTP).

In exemplary embodiments, the tire class comprises data representing tire type. A tire type can be a summer tire, a winter tire, a cup-tire or an all-season tire. These different types of tires differ from one another in handling, comfort and noise. In order to efficiently differentiate these types of tires, a classification approach was done.

To this end several different vehicle properties parameters were investigated, for example, (inverse) tire longitudinal stiffness, temperature, wheel resonance frequency, estimated load, wheel radius change while cornering, wheel vibration behavior during various speeds and directly measured tire pressure.

The tractive force is related to the longitudinal slip. In an idealized relation the tractive force increases linearly with respect to slip, then approaches a peak and decreases to a static value when slip is large. In regular driving, a linear approximation about o is appropriate. The slip seldom increases to a larger value, and when it does, the estimation algorithm can simply be turned off.

The linearized model can be written as follows:

$$\mu = k_s s \qquad (1)$$

where $\mu$ is the normalized tractive force, s is the slip, and $k_s$ the slip-slope or longitudinal tire stiffness.

More explicitly, $\mu = \frac{F_{trac}}{N_{tire}}$ is the ratio of the tractive force generated by the driveline on the wheel, and the normal force exerted on the wheel. The slip s is defined as $s = \frac{\omega R - v}{v}$, where $\omega$ is the wheel rotational speed, R is the (nominal) tire rolling radius and v the longitudinal speed. Note that this model holds provided that wheel slip is low, and that the vehicle isn't traveling in too sharp a curve.

With, for example, a Front-Wheel Drive (FWD) vehicle, the velocity v can be estimated by looking at the rear wheel rotational speed. Then the tractive force $\mu$ for the rear wheel is o. However, there may be a discrepancy between the front and rear wheel rolling radius, which creates an offset $\delta$. It becomes

$$\mu = k_s(s - \delta), \qquad (2)$$

and now both $k_s$ and $\delta$ need to be estimated. This can be reformulated into:

$$s = \frac{1}{k_s}\mu + \delta \qquad (3)$$

Starting therefrom estimation with simple methods, such as least squares linear regression, is possible. In the following, $1/k_s$ is used for summer or winter tire classification or determining a tire class.

As already noted, two influential variables were the estimated inverse tire longitudinal stiffness and the temperature. With only these two variables, it is possible to rather accurately determine whether a tire is a summer or winter tire.

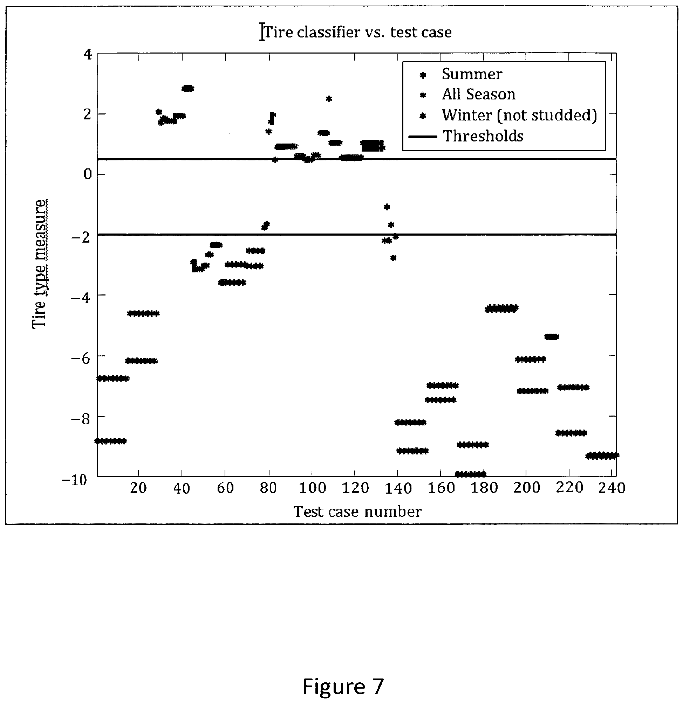

A mean of the inverse longitudinal stiffness is computed over a longer period of time. In Figure 7, exemplary results are shown.

In exemplary embodiments, a tire class may comprise data representative of tire wear. Vehicle tires wear out after a certain amount of driving. This is normal behavior. However, in certain conditions tires may wear more quickly than usual, for example, in the case a winter tire is driven at a warm ambient temperature, e.g., above 15°C. The tire class as determined on the basis of vehicle properties parameters can be used to detect wear of tires, and when the ambient temperature is high, the tire wear can be considered in vehicle control and information systems such as iTPMS systems.

In exemplary embodiments, a tire class may comprise data representative of rim size. The rim size can be determined (or at least estimated) through, e.g., regression, for example, with the support vector regressor. For rim size determination, it is contemplated to use one or more vehicle properties parameters indicating signal spectrum energy around 15 Hz (e.g. 10-15Hz) and about 45 Hz (e.g. 30-60 Hz) as well as the estimated vibration frequency for a wheel the rim size of which is desired. The following table shows exemplary spectral modes in a wheel speed signal, wherein the 10-15 Hz (so-called 15 Hz) and 30-60 Hz (so-called 45 Hz) spectral powers are used.

| | 0-10 | 10-15 | 15-30 | 30-60 | 60-80 | 80-100 | 100- |
|---|---|---|---|---|---|---|---|
| Speed | | | | | | | |
| Mode 1 Noise | | | | | | | |
| Mode 2 Noise | | | | | | | |
| Mode 3 Noise | | | | | | | |

The so-called 45 Hz vibration mode energy is sensitive to the rim size. Both the so-called 15 Hz and so-called 45 Hz vibration mode powers are sensitive to the road roughness and rim size, but the so-called 15 Hz vibration mode power is insensitive to rim size. Thus, combining the information from the signal spectrum energy of the so-called 15 and 45 Hz modes removes the impact of road roughness level and improves the rim size determination. In addition, the absolute wheel vibration frequency around the so-called 45 Hz mode was found to be influenced by the rim size as well. The slip slope, possibly normalized by temperature, can be taken into account as well.

For example, a cross-validation was applied the used data followed by application of the Akaike Information Criterion (AIC). Also, non-linearities in the form of, e.g., quadratic functions can be used. In order to take into account noise, which may be significant, higher non-linearities can be ruled out.

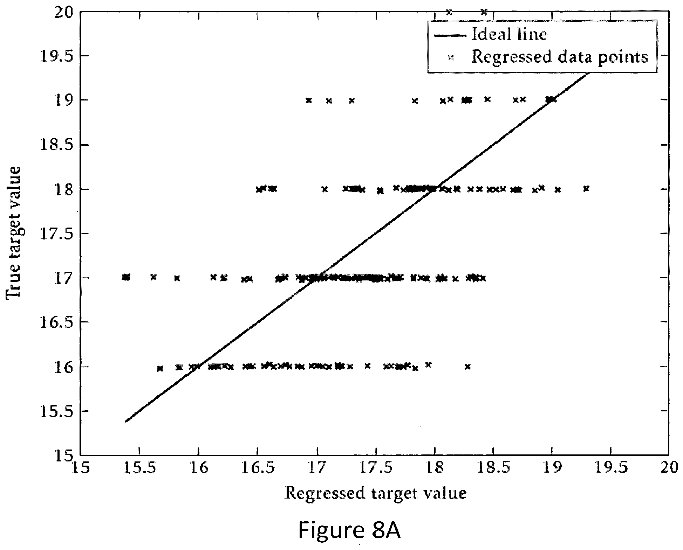

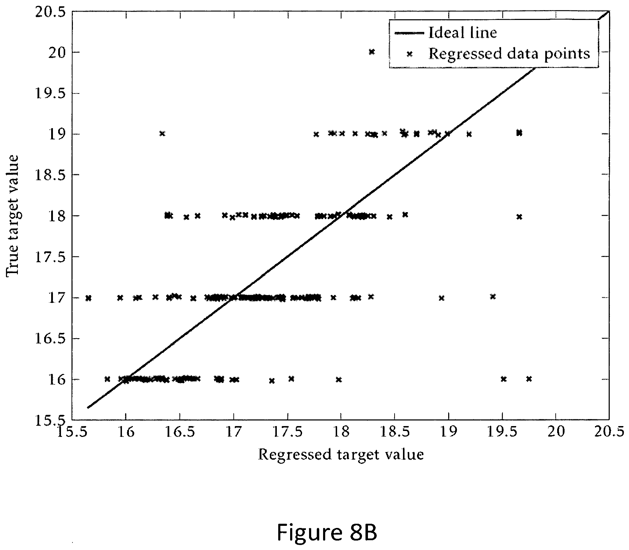

Figures 8A and 8B show exemplary results of rim size estimations using a Support Vector Machine (SVM) for classification and regression. In both cases, SVM regression was used to determine or, at least, estimate rim sizes. Features used are (logarithms of) 15 and 45 Hz powers as well as 45 Hz vibration frequency and slip-slope normalized with respect to temperature. Also, in both cases, the x-axis indicates regressed rim values in Inch and the y-axis indicates the actual rim sizes in Inch.

In further exemplary additional or alternative embodiments, a tire class may data representative of tire pressure vibration sensitivity. A tire characteristic that also impacts the functionality of iTPMS is how sensitive the tire vibration frequency is to pressure changes. It can be useful to be able to compute this sensitivity and improve the functionality of iTPMS:es. Some tires respond more strongly to variations in tire pressure than others. It may be useful to know how much a tire reacts to a pressure change in certain aspects in order to know how to weigh together different signals when making the decision whether or not the tire has an incorrect inflation pressure. For example, a tire class may be determined based on the 15 and 45 Hz signal energies and the vibration frequency and vibration frequency spread. For example, a cross-validation was applied the used data followed by application of the Akaike Information Criterion (AIC). In order to compensate non-linearities of the data, it is possible to select data set with singly quadratic additions.

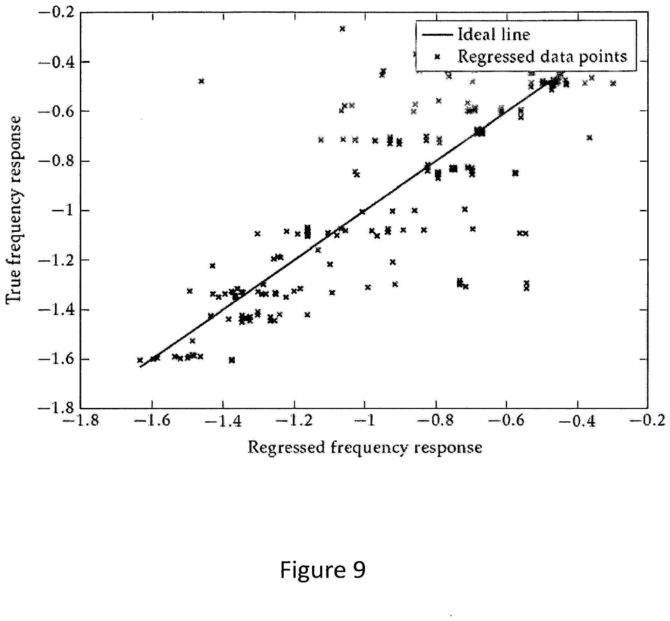

Figure 9 shows exemplary results of tire pressure vibration sensitivity determinations/estimations using an iTPMS and regression. In both cases, the x-axis indicates regressed pressure vibration sensitivity values in Hertz and the y-axis indicates the actual pressure vibration sensitivity in Hertz.

**Claims**

1. A method of determining a tire class of a tire mounted on a wheel of a driving vehicle, the method comprising:

   obtaining a set of estimated vehicle properties parameters, wherein said vehicle properties parameters are determined based at least one sensor signal received from sensors comprised in said vehicle;
   determining a tire class based on said set of vehicle properties parameters,
   **characterized in that**
   said vehicle properties parameters are determined based on

   sensor data indicative of individual tire longitudinal stiffness for at least one wheel or of inverse individual tire longitudinal stiffness for at least one wheel, and
   sensor data indicative of ambient temperature and/or of individual tire temperature for at least one wheel.

2. The method of claim 1, wherein the tire class is determined based on said set of vehicle properties parameters and a predetermined relation.

3. The method of claim 2, wherein the predetermined relation is at least one of a vehicle property parameter values estimation relation and one or more decision boundaries.

4. The method of one of the preceding claims, wherein a tire class comprises data indicative of

   - tire type selected from a group of tire types including a summer tire, an all season tire, a winter tire and a cup-tire, and/or
   - wheel rim size, and/or
   - pressure vibration sensitivity.

**5.** The method of one of the preceding claims, further comprising the step of controlling at least one of a traction control system, an electronic stability program system, an active suspension system, an anti-lock braking system and a tire pressure monitoring system comprised in said vehicle based on the determined tire class.

**6.** System of estimating the tire class of a tire mounted on a wheel of a driving vehicle, the system comprising:

a first sensor configured to communicate sensor data indicative of individual tire longitudinal stiffness for at least one wheel or of inverse individual tire longitudinal stiffness for at least one wheel as sensor signals,
a second sensor configured to communicate sensor data indicative of ambient temperature and/or of individual tire temperature for at least one wheel,
an evaluator (102) configured to:

receive the sensor signals from the first sensor and the second sensor,
determining a set of estimated vehicle properties parameters based on the received sensor signals ;
determining a tire class based on said set of estimated vehicle properties parameters.

**7.** The system of claim 6, wherein the evaluator (102) configured to determine the tire class on said set of vehicle properties parameters and a predetermined relation.

**8.** The system of claim 7, wherein the predetermined relation is at least one of a vehicle property parameter values estimation relation and one or more decision boundaries.

**9.** The system of one of the claims 6 to 8, wherein the at least one sensors includes at least one of a rotary speed sensor located at a wheel, a common wheel speed sensor, a wheel acceleration sensor.

**10.** Computer program product adapted for estimating the tire class of a tire mounted on a wheel of a driving vehicle, the computer program being arranged to perform the method steps of one of the claims 1 to 5.


**Patentansprüche**

**1.** Verfahren zum Bestimmen einer Reifenklasse eines an einem Rad eines fahrenden Fahrzeugs montierten Reifens, wobei das Verfahren umfasst:

- Erhalten eines Satzes geschätzter Fahrzeugeigenschaftsparameter, wobei die Fahrzeugeigenschaftsparameter basierend auf wenigstens einem Sensorsignal bestimmt werden, das von im Fahrzeug enthaltenen Sensoren empfangen wird,
- Bestimmen einer Reifenklasse basierend auf dem Satz Fahrzeugeigenschaftsparameter,
- **dadurch gekennzeichnet, dass**
- die Fahrzeugeigenschaftsparameter bestimmt werden basierend auf:

- Sensordaten, die eine individuelle Reifenlängssteifigkeit für wenigstens ein Rad oder eine inverse individuelle Reifenlängssteifigkeit für wenigstens ein Rad angeben, und
- Sensordaten, die eine Umgebungstemperatur und/oder eine individuelle Reifentemperatur für wenigstens ein Rad angeben.

**2.** Verfahren nach Anspruch 1, wobei die Reifenklasse basierend auf dem Satz Fahrzeugeigenschaftsparameter und einem vordefinierten Verhältnis bestimmt wird.

**3.** Verfahren nach Anspruch 2, wobei das vordefinierte Verhältnis ein Fahrzeugeigenschaftsparameterwertschätzverhältnis und/oder eine oder mehrere Entscheidungsgrenzen umfasst.

**4.** Verfahren nach einem der vorhergehenden Ansprüche, wobei eine Reifenklasse Daten umfasst, die Auskunft geben über:

- einen Reifentyp, der aus einer Gruppe Reifentypen ausgewählt wird, die einen Sommerreifen, einen Ganzjahresreifen, einen Winterreifen und einen Cup-Reifen umfasst, und/oder
- eine Radfelgengröße und/oder

- eine Druckvibrationsempfindlichkeit.

5. Verfahren nach einem der vorhergehenden Ansprüche, das ferner den Schritt des Steuerns eines im Fahrzeug enthaltenen Antriebsschlupfregelsystems, Fahrdynamikregelsystems, aktiven Aufhängungssystems, Antiblockiersystems und/oder Reifendruckkontrollsystems basierend auf der bestimmten Reifenklasse umfasst.

6. System zum Schätzen der Reifenklasse eines an einem Rad eines fahrenden Fahrzeugs montierten Reifens, wobei das System umfasst:

   - einen ersten Sensor, der dafür konfiguriert ist, als Sensorsignale Sensordaten zu kommunizieren, die eine individuelle Reifenlängssteifigkeit für wenigstens ein Rad oder eine inverse individuelle Reifenlängssteifigkeit für wenigstens ein Rad angeben,
   - einen zweiten Sensor, der dafür konfiguriert ist, Sensordaten zu kommunizieren, die eine Umgebungstemperatur und/oder eine individuelle Reifentemperatur für wenigstens ein Rad angeben,
   - eine Auswerteeinrichtung (102), die dafür konfiguriert ist:

      - die Sensorsignale vom ersten Sensor und zweiten Sensor zu empfangen,
      - einen Satz geschätzter Fahrzeugeigenschaftsparameter basierend auf den empfangenen Sensorsignalen zu bestimmen,
      - eine Reifenklasse basierend auf dem Satz geschätzter Fahrzeugeigenschaftsparameter zu bestimmen.

7. System nach Anspruch 6, wobei die Auswerteeinrichtung (102) dafür konfiguriert ist, die Reifenklasse anhand des Satzes Fahrzeugeigenschaftsparameter und eines vordefinierten Verhältnisses zu bestimmen.

8. System nach Anspruch 7, wobei das vordefinierte Verhältnis ein Fahrzeugeigenschaftsparameterwertschätzverhältnis und/oder eine oder mehrere Entscheidungsgrenzen umfasst.

9. System nach einem der Ansprüche 6 bis 8, wobei der wenigstens eine Sensor einen an einem Rad befindlichen Drehzahlsensor, einen üblichen Raddrehzahlsensor und/oder einen Radbeschleunigungssensor umfasst.

10. Computerprogrammprodukt, das dafür ausgelegt ist, die Reifenklasse eines an einem Rad eines fahrenden Fahrzeugs montierten Reifens zu schätzen, wobei das Computerprogramm dazu eingerichtet ist, die Verfahrensschritte nach einem der Ansprüche 1 bis 5 durchzuführen.

**Revendications**

1. Procédé de détermination d'une classe de pneus d'un pneu qui est monté sur une roue d'un véhicule de conduite, le procédé comprenant :

   l'obtention d'un jeu de paramètres de propriétés de véhicule estimés, dans lequel lesdits paramètres de propriétés de véhicule sont déterminés sur la base d'au moins un signal de capteur qui est reçu depuis des capteurs qui sont compris dans ledit véhicule ; et
   la détermination d'une classe de pneus sur la base dudit jeu de paramètres de propriétés de véhicule ;
   **caractérisé en ce que** :
   lesdits paramètres de propriétés de véhicule sont déterminés sur la base :

      de données de capteur qui sont indicatives d'une raideur longitudinale de pneu individuel pour au moins une roue ou d'une raideur longitudinale de pneu individuel inverse pour au moins une roue ; et
      de données de capteur qui sont indicatives de la température ambiante et/ou de la température de pneu individuel pour au moins une roue.

2. Procédé selon la revendication 1, dans lequel la classe de pneus est déterminée sur la base dudit jeu de paramètres de propriétés de véhicule et d'une relation prédéterminée.

3. Procédé selon la revendication 2, dans lequel la relation prédéterminée est au moins un critère relationnel pris parmi une relation d'estimation de valeurs de paramètres de propriétés de véhicule et une ou plusieurs limites de décision.

**4.** Procédé selon l'une des revendications précédentes, dans lequel une classe de pneus comprend des données qui sont indicatives :

- d'un type de pneus qui est sélectionné parmi un groupe de types de pneus incluant un pneu d'été, un pneu toutes saisons, un pneu d'hiver et un pneu Cup ; et/ou
- de la dimension de la jante de la roue ; et/ou
- de la sensibilité aux vibrations en pression.

**5.** Procédé selon l'une des revendications précédentes, comprenant en outre l'étape de commande d'au moins un système pris parmi un système de commande de traction, un système de programme de stabilité électronique, un système de suspension active, un système de freinage antiblocage et un système de surveillance de pression de pneu qui sont compris dans ledit véhicule sur la base de la classe de pneus déterminée.

**6.** Système d'estimation de la classe de pneus d'un pneu qui est monté sur une roue d'un véhicule de traction, le système comprenant :

un premier capteur qui est configuré pour communiquer des données de capteur qui sont indicatives d'une raideur longitudinale de pneu individuel pour au moins une roue ou d'une raideur longitudinale de pneu individuel inverse pour au moins une roue en tant que signaux de capteur ;
un second capteur qui est configuré pour communiquer des données de capteur qui sont indicatives de la température ambiante et/ou de la température de pneu individuel pour au moins une roue ; et
un évaluateur (102) qui est configuré pour :

recevoir les signaux de capteur en provenance du premier capteur et du second capteur ;
déterminer un jeu de paramètres de propriétés de véhicule estimés sur la base des signaux de capteur reçus ; et
déterminer une classe de pneus sur la base dudit jeu de paramètres de propriétés de véhicule estimés.

**7.** Système selon la revendication 6, dans lequel l'évaluateur (102) est configuré pour déterminer la classe de pneus sur la base dudit jeu de paramètres de propriétés de véhicule et d'une relation prédéterminée.

**8.** Système selon la revendication 7, dans lequel la relation prédéterminée est au moins un critère relationnel pris parmi une relation d'estimation de valeurs de paramètres de propriétés de véhicule et une ou plusieurs limites de décision.

**9.** Système selon l'une des revendications 6 à 8, dans lequel l'au moins un capteur inclut au moins un capteur pris parmi un capteur de vitesse de rotation qui est localisé au niveau d'une roue, un capteur de vitesse de roues commune et un capteur d'accélération de roue.

**10.** Produit programme d'ordinateur adapté' pour estimer la classe de pneus d'un pneu qui est monté sur une roue d'un véhicule de traction, le programme d'ordinateur étant agencé pour réaliser les étapes de procédé selon l'une des revendications 1 à 5.

Figure 1

Figure 2

Figure 3

Figure 4

| 510 |
|-----|

| 520 |
|-----|

| 530 |
|-----|

Figure 5

Figure 6

Figure 7

Figure 8A

Figure 8B

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1510427 A2
- US 2004225423 A
- WO 2005005175 A2
- DE 102009029272 A1
- EP 0970823 A2